# EUROPEAN PATENT APPLICATION

(11) **EP 2 511 309 A1**
(43) Date of publication of application: **17.10.2012**
(21) Application number: 11732799.9
(22) Date of filing: 13.01.2011
(51) Int. Cl.: C08F 112/06, C08F 4/44

(54) **STYRENE POLYMER AND MANUFACTURING METHOD THEREFOR**

(30) Priority: 18.01.2010 JP 2010008509
(71) Applicant: Nippon Soda Co., Ltd., Tokyo 100-8165 (JP)
(72) Inventor: TAKAHASHI, Eiji, Ichihara-shi Chiba 290-0045 (JP)
(74) Representative: Cabinet Plasseraud
(86) International application number: PCT/JP2011/000137
(87) International publication number: WO 2011/086926

(57) **Abstract**

There is provided a method for manufacturing a styrene polymer having a low number average molecular weight and a low polydispersity index, wherein the polymer has a number average molecular weight of 2000 or less and a polydispersity index of 1.01 to 1.10. For this purpose, the method includes polymerizing a styrene monomer in a solvent comprising an ether group-containing solvent in the presence of a polymerization initiator represented by formula [II] (wherein R¹ represents a hydrogen atom, an alkyl group, or a phenyl group; R² represents an alkyl group; R³ represents an alkyl group or an alkoxy group, wherein when n is 2 or more, R³ is the same or different from each other; and n represents an integer of 0 to 5), an organometallic compound represented by formula [III]: (R⁸)ₘM [III] (wherein R⁸ represents an alkyl group or an aryl group, wherein when m is 2 or more, R⁸ is the same or different from each other; M represents an atom belonging to Group 2, 12 or 13 of the long period type periodic table; and m represents the valence of M), and an organic potassium compound, at a temperature between -10°C or higher and a boiling point of the solvent or lower.

## Description

### Technical Field

The present invention relates to a new styrene polymer having a low molecular weight and a low polydispersity index, and a method for manufacturing the same. Further, with respect to the manufacturing method, the present invention relates to a manufacturing method which can be applied not only to a new styrene polymer having a low molecular weight and a low polydispersity index, but also to a wide range of styrene polymers.
The present application claims priority to Japanese Patent Application No. 2010-8509 filed on January 18, 2010, the contents of which are incorporated herein by reference.

### Background Art

There has been known a manufacturing method in which a styrene monomer is polymerized by anionic polymerization to obtain a styrene polymer having a low molecular weight and a low polydispersity index.

For example, Patent Document 1 has disclosed a method for manufacturing a polymer having a low molecular weight and a low polydispersity index. In this document, a styrene polymer having a molecular weight of 3000 or less and a polydispersity index of 1.20 or less has been produced by using a polymerization initiator prepared from a styrenic compound such as diphenylethylene, an organoalkali metal compound such as n-butyllithium, and an organometallic compound such as dialkyl zinc.

Further, a method described in Patent Document 2 is known as another method for manufacturing a polymer having a low molecular weight and a low polydispersity index. Patent Document 2 has obtained a styrene polymer having a molecular weight of 1350 and a polydispersity index of 1.16 by using a sodium dispersion as a polymerization initiator and performing polymerization at -70°C in tetrahydrofuran.

On the other hand, in the anionic polymerization of a styrene monomer using an organoalkali metal compound such as alkyllithium as an initiator, if the polymerization is performed in the vicinity of room temperature using an ether group-containing solvent such as tetrahydrofuran, the initiator may react with the solvent. Therefore, generally, the reaction has been performed at a polymerization temperature of about -80°C (for example, refer to Patent Document 3), or the polymerization has been performed using a hydrocarbon solvent such as toluene.

### Prior Art Documents

### Patent Documents

Patent Document 1: Japanese unexamined Patent Application Publication No. 2007-100077
Patent Document 2: Japanese unexamined Patent Application Publication No. 3-277608
Patent Document 3: Japanese unexamined Patent Application Publication No. 2004-323588

### Summary of the Invention

### Object to be Solved by the Invention

As described above, there has been known a method for polymerizing a styrene polymer having a low molecular weight and a low polydispersity index. However, when it was intended to industrially produce a polymer having a very small number average molecular weight and a very low polydispersity index, that is, a polymer having a number average molecular weight of 2000 or less and a polydispersity index (Mw/Mn) of 1.01 to 1.10, it was extremely difficult to produce such a polymer by a conventional method.

For example, when it was intended to produce such a polymer by the method described in Patent Document 1, the method had a problem in that a polymer having a low polydispersity index cannot be obtained because it was difficult to control the polymerization reaction.

Further, the method described in Patent Document 2 needs very low temperature for the reaction and needs to use metallic sodium which has a disadvantage in handleability. Furthermore, it was difficult to produce a polymer having a number average molecular weight of 2000 or less and a narrow molecular weight distribution of 1.01 to 1.10 by the method described in Patent Document 2.

On the other hand, as described above, when the polymerization reaction is performed using an ether group-containing solvent such as tetrahydrofuran, it was necessary to perform the reaction at a very low temperature (for example, about -50°C or less) in order to avoid the reaction of the solvent with a polymerization initiator or a polymer anion. The polymerization reaction under a very low temperature is disadvantageous as an industrial polymerization method in terms of production cost and the like. Although polymerization reaction can be performed at about -10°C or higher by using a hydrocarbon solvent such as toluene, the polymerization reaction in a hydrocarbon solvent such as toluene had a problem that the rate of the polymerization reaction was remarkably slow.

### Means to Solve the Object

The present inventors have intensively studied to solve the problems as described above. As a result, they have found that, even if a polymerization solvent containing an ether group-containing solvent is used, various bad influences resulting from using such a solvent are suppressed and a styrene polymer having a low molecular weight and a low polydispersity index can be produced, by using a specific polymerization initiator and organometallic compound in combination and adding thereto an organic potassium compound. The present invention has been completed on the basis of these findings.

Specifically, the present invention relates to
(1) a styrene polymer having a number average molecular weight of 2000 or less and a polydispersity index (Mw/Mn) of 1.01 to 1.10;
(2) the styrene polymer according to (1), wherein the polymer has a repeating unit represented by formula [I]:

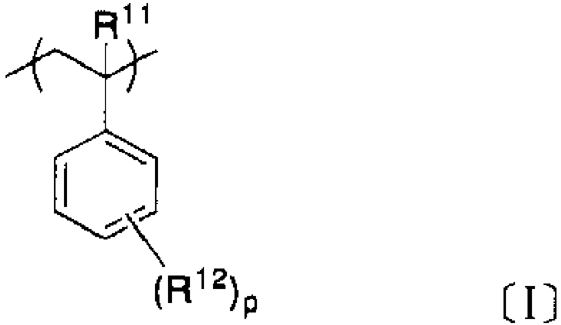

(wherein, R¹¹ represents a hydrogen atom or an alkyl group; R¹² represents a hydroxy group, an alkyl group, an alkoxy group, a t-butoxycarbonyl group, a t-butoxycarbonylmethyl group, or a tetrahydropyranyl group, wherein when p is 2 or more, R¹² is the same or different from each other; and p represents an integer of 0 to 5);
(3) a method for manufacturing a styrene polymer according to (1) or (2), comprising polymerizing a styrene monomer in a solvent comprising an ether group-containing solvent in the presence of
a polymerization initiator represented by formula [II]:

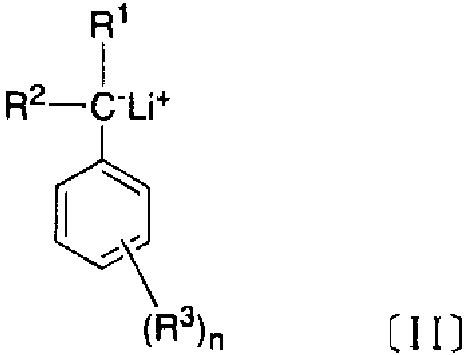

(wherein R¹ represents a hydrogen atom, an alkyl group, or a phenyl group; R² represents an alkyl group; R³ represents an alkyl group or an alkoxy group, wherein when n is 2 or more, R³ is the same or different from each other; and n represents an integer of 0 to 5),
an organometallic compound represented by formula [III]:

(R⁸)ₘM [III]

(wherein R⁸ represents an alkyl group or an aryl group, wherein when m is 2 or more, R⁸ is the same or different from each other; M represents an atom belonging to Group 2, 12 or 13 of the long period type periodic table; and m represents the valence of M), and
an organic potassium compound, at a temperature between - 10°C or higher and a boiling point of the solvent or lower; (4) the method for manufacturing a styrene polymer according to (3), comprising allowing an alkyllithium compound and a compound represented by formula [IV]:

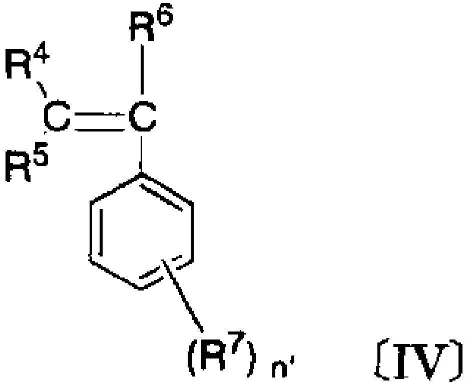

(wherein R⁴ represents a hydrogen atom, an alkyl group, or a phenyl group; R⁵ represents a hydrogen atom or an alkyl group; R⁶ represents a hydrogen atom, an alkyl group, or a phenyl group; R⁷ represents an alkyl group or an alkoxy group; and n' represents an integer of 0 to 5) to react with each other in a solvent comprising an ether group-containing solvent to form a polymerization initiator represented by formula [II], and then adding an organometallic compound represented by formula [III], a styrene monomer, and an organic potassium compound;
(5) the method for manufacturing a styrene polymer according to (3) or (4), wherein the compound represented by formula [III] is dialkyl zinc, dialkyl magnesium, or trialkyl aluminum;
(6) a method for manufacturing a styrene polymer, comprising polymerizing a styrene monomer in a solvent comprising an ether group-containing solvent in the presence of
a polymerization initiator represented by formula [II]:

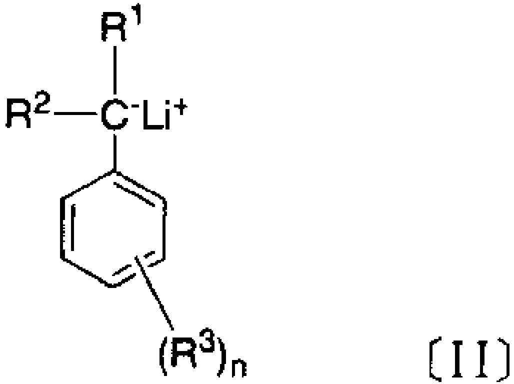

(wherein R¹ represents a hydrogen atom, an alkyl group, or a phenyl group; R² represents an alkyl group; R³ represents an alkyl group or an alkoxy group, wherein when n is 2 or more, R³ is the same or different from each other; and n represents an integer of 0 to 5),
an organometallic compound represented by formula [III]:

(R⁸)ₘM [III]

(wherein R⁸ represents an alkyl group or an aryl group, wherein when m is 2 or more, R⁸ is the same or different from each other; M represents an atom belonging to Group 2, 12 or 13 of the long period type periodic table; and m represents a valence of M), and
an organic potassium compound represented by formula [V]:

R⁹-O⁻K⁺ [V]

(wherein R⁹ represents an alkyl group, a cycloalkyl group, an alkylsulfonyl group, an arylsulfonyl group, a heteroarylsulfonyl group, an alkylcarbonyl group, an arylcarbonyl group, a heteroarylcarbonyl group, an aryl group, a heteroaryl group, an aralkyl group, or a heteroaralkyl group), at a temperature between -10°C or higher and a boiling point of the solvent or lower; (7) the method for manufacturing a styrene polymer according to (6), comprising allowing an alkyllithium compound and a compound represented by formula [IV]:

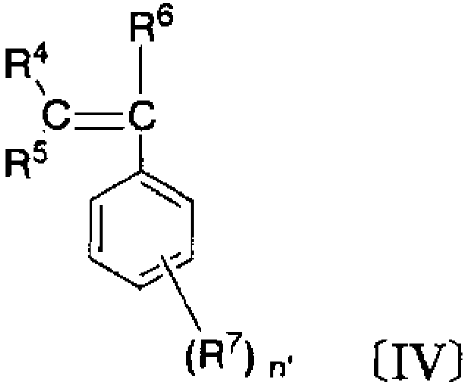

(wherein R⁴ represents a hydrogen atom, an alkyl group, or a phenyl group; R⁵ represents a hydrogen atom or an alkyl group; R⁶ represents a hydrogen atom, an alkyl group, or a phenyl group; R⁷ represents an alkyl group or an alkoxy group; and n' represents an integer of 0 to 5) to react with each other in a solvent comprising an ether group-containing solvent to form a polymerization initiator represented by formula [II], and then adding an organometallic compound represented by formula [III], a styrene monomer, and an organic potassium compound represented by formula (V); and (8) the method for manufacturing a styrene polymer according to any one of (3) to (7), wherein the ether group-containing solvent is tetrahydrofuran.

### Mode of Carrying Out the Invention

The meaning of the terms used in the present specification will be described below, and the present invention will be further described in detail.
An "alkyl group" means a linear or branched C1-C20 alkyl group. Examples thereof include a methyl group, an ethyl group, a propyl group, an isopropyl group, a butyl group, an isobutyl group, a sec-butyl group, a tert-butyl group, a pentyl group, an isopentyl group, a hexyl group, an isohexyl group, and an octyl group.
An "alkoxy group" means a linear or branched C1-C20 alkoxy group, and examples thereof include a methoxy group, an ethoxy group, a propoxy group, an isopropoxy group, a butoxy group, a sec-butoxy group, an isobutoxy group, a tert-butoxy group, a pentyloxy group, an isopentyloxy group, a hexyloxy group, and an isohexyloxy group.
Examples of an "aryl group" include phenyl and naphthyl.
A "heteroaryl group" means 5- or 6-membered monocyclic heteroaryl containing one or two or more, preferably one to four heteroatoms, which are the same or different, selected from the group consisting of an oxygen atom, a nitrogen atom, and a sulfur atom; or a condensed ring heteroaryl in which the monocyclic heteroaryl and the aryl are condensed, or the same or different monocyclic heteroaryls are condensed with each other, and examples thereof include pyrrolyl, furyl, thienyl, imidazolyl, pyrazolyl, thiazolyl, isothiazolyl, oxazolyl, isoxazolyl, triazolyl, tetrazolyl, oxadiazolyl, 1,2,3-thiadiazolyl, 1,2,4-thiadiazolyl, 1,3,4-thiadiazolyl, pyridyl, pyrazinyl, pyrimidinyl, pyridazinyl, 1,2,4-triazinyl, 1,3,5-triazinyl, indolyl, benzofuranyl, benzothienyl, benzoimidazolyl, benzopyrazolyl, benzoxazolyl, benzoisoxazolyl, benzothiazolyl, benzoisothiazolyl, indazolyl, purinyl, quinolyl, isoquinolyl, phthalazinyl, naphthyridinyl, quinoxalinyl, quinazolinyl, cinnolinyl, pteridinyl, and pyrido[3,2-b]pyridyl.
A "cycloalkyl group" means a C3-C8 cycloalkyl group, and examples thereof include a cyclopropyl group, a cyclobutyl group, a cyclopentyl group, and a cyclohexyl group.
An "alkylsulfonyl group" is a group in which the alkyl group is combined with a sulfonyl group, and examples thereof include methylsulfonyl, ethylsulfonyl, and n-propylsulfonyl.
An "arylsulfonyl group" is a group in which the aryl group is combined with a sulfonyl group.
A "heteroarylsulfonyl group" is a group in which the heteroaryl group is combined with a sulfonyl group.
An "aralkyl group" means a group in which the aryl group and the alkyl group are combined, and examples thereof include benzyl, 1-phenylethyl, 2-phenylethyl, 1-naphthylmethyl, and 2-naphthylmethyl.
A "heteroaralkyl group" means a group in which the heteroaryl group and the alkyl group are combined.
An "alkylcarbonyl group" is a group in which the alkyl group is combined with a carbonyl group, and examples thereof include acetyl, propionyl, isobutyryl, valeryl, isovaleryl, and pivaloyl.
An "arylcarbonyl group" is a group in which the aryl group is combined with a carbonyl group.
A "heteroarylcarbonyl group" is a group in which the heteroaryl group is combined with a carbonyl group.

### (Styrene polymer)

The styrene polymer in the present invention is not particularly limited as long as it is a polymer obtained by polymerizing a styrene monomer, but is preferably a polymer which has a repeating unit represented by formula [I].
The styrene monomer can be used alone or in combination of two or more.

In formula [I], R¹¹ represents a hydrogen atom or an alkyl group, and a hydrogen atom or a C1-C6 alkyl group is preferred; R¹² represents a hydroxy group, an alkyl group, an alkoxy group, a t-butoxycarbonyl group, a t-butoxycarbonylmethyl group, or a tetrahydropyranyl group, wherein a C1-C6 alkyl group, a C1-C6 alkoxy group, a t-butoxycarbonyl group, a t-butoxy carbonylmethyl group, or a tetrahydropyranyl group is preferred; p represents an integer of 0 to 5, and when p is two or more, R¹² is the same or different from each other; and p is preferably 1 to 3.
The alkyl group of R¹¹ and the alkyl group and the alkoxy group of R¹² optionally have a substituent, wherein the substituent includes a C1-C6 alkyl group, a C1-C6 alkoxy group, and a phenyl group.

Specific examples of the polymer represented by formula [I] include polystyrene, poly-α-methylstyrene, poly-α-methyl-p-methylstyrene, poly-p-methylstyrene, poly-m-methylstyrene, poly-o-methylstyrene, poly-p-ethylstyrene, poly-2,4-dimethylstyrene, poly-2,5-dimethylstyrene, poly-p-isopropylstyrene, poly-2,4,6-triisopropylstyrene, poly-p-t-butoxystyrene, poly-p-t-butoxy-α-methylstyrene, poly-m-t-butoxystyrene, and poly-p-hydroxystyrene.

### (Method for manufacturing styrene polymer)

The method for manufacturing a polymer according to the present invention, includes polymerizing a styrene monomer in a solvent comprising an ether group-containing solvent in the presence of a polymerization initiator represented by formula [II], an organometallic compound represented by formula [III], and an organic potassium compound, at a temperature between -10°C or higher and a boiling point of the solvent or lower. A specific method for implementing the manufacturing method of the present invention is not particularly limited as long as it is a method capable of manufacturing a styrene polymer having a low polydispersity index even if the polymer is a low molecular weight polymer having a number average molecular weight of 2000 or less.
The polymerization initiator represented by formula [II] itself may be added to a system or produced in a system.
When the polymerization initiator represented by formula [II] is added, the order of the addition of the polymerization initiator represented by formula [II] and the organometallic compound represented by formula [III] is not particularly limited, but they may be added simultaneously.

Further, an alkyllithium compound and a compound represented by formula [IV] may be allowed to react with each other in a solvent comprising an ether group-containing solvent to form the polymerization initiator represented by formula [II] before adding the organometallic compound represented by formula [III].
It is preferred to add the styrene monomer after the polymerization initiator represented by formula [II] and the organometallic compound represented by formula [III] are allowed to be present as described above.
The order of the addition of the organic potassium compound to a reaction system is not particularly limited.
However, in order to control a polymerization reaction in the case of manufacturing a low molecular weight polymer having a number average molecular weight of 2000 or less, it is preferred to add the organic potassium compound after the styrene monomer is added in the presence of the polymerization initiator represented by formula [II] and the organometallic compound represented by formula [III]. Further, it is more preferred to add the organic potassium compound after the styrene monomer is added in the presence of the polymerization initiator represented by formula [II] and the organometallic compound represented by formula [III] to allow the polymerization initiator represented by formula [II] to be reacted with the styrene monomer to the extent that the initiator does not substantially remain.

The styrene monomer is not particularly limited as long as it has an anionic polymerizable unsaturated bond, and specific examples include styrene, α-alkylstyrene, and nucleus-substituted styrene.
A nucleus substituent is not particularly limited as long as it is an inert group to anion species having polymerization initiation ability and anion species not having polymerization initiation ability, and specific examples include an alkyl group, an alkoxyalkyl group, an alkoxy group, a t-butoxycarbonyl group, a t-butoxycarbonylmethyl group, and a tetrahydropyranyl group. Further, specific examples of styrene derivatives include styrene, α-methylstyrene, α-methyl-p-methylstyrene, p-methylstyrene, m-methylstyrene, o-methylstyrene, p-ethylstyrene, 2,4-dimethylstyrene, 2,5-dimethylstyrene, p-isopropylstyrene, 2,4,6-triisopropylstyrene, p-t-butoxystyrene, p-t-butoxy-α-methylstyrene, and m-t-butoxystyrene. These styrene derivatives can be used alone or in combination of two or more.

In formula [II],
R¹ represents a hydrogen atom, an alkyl group, or a phenyl group, wherein a hydrogen atom, a C1-C6 alkyl group, or a phenyl group is preferred; the alkyl group and the phenyl group optionally have a substituent; the substituent in the case where R¹ is an alkyl group includes a C1-C6 alkoxy group and a phenyl group; and the substituent in the case where R¹ is a phenyl group includes a C1-C6 alkyl group and a C1-C6 alkoxy group;
R² represents an alkyl group, wherein a C1-C6 alkyl group is preferred; the alkyl group optionally has a substituent, wherein the substituent includes a C1-C6 alkoxy group and a phenyl group; and
R³ represents an alkyl group or an alkoxy group, wherein a C1-C6 alkyl group or a C1-C6 alkoxy group is preferred; the alkyl group and the alkoxy group optionally have a substituent, wherein the substituent includes a C1-C6 alkoxy group; n represents an integer of 0 to 5, and when n is 2 or more, R³ is the same or different from each other; and n is preferably 1 to 3.

The polymerization initiator represented by the above formula [II] can be obtained, for example, by allowing the alkyllithium compound and the compound represented by formula [IV] to react with each other. Specific examples of the alkyllithium compound include ethyllithium, n-butyllithium, sec-butyllithium, and t-butyllithium. Among these, n-butyllithium, sec-butyllithium, and t-butyllithium are preferred. In the present invention, the polymerization can be performed under controlled conditions even if an easily-handled n-alkyllithium such as n-butyllithium is used. These alkyllithium compounds can be used alone or in combination of two or more.

In formula [IV],
R⁶, R⁷, and n' have the same meaning as R¹, R³, and n in the above formula [II], respectively.
R⁴ represents a hydrogen atom, an alkyl group, or a phenyl group, wherein a hydrogen atom, a C1-C6 alkyl group, or a phenyl group is preferred; the alkyl group and the phenyl group optionally have a substituent, wherein the substituent includes a C1-C6 alkoxy group;
R⁵ represents a hydrogen atom or an alkyl group, wherein a hydrogen atom or a C1 - C6 alkyl group is preferred; the alkyl group optionally has a substituent, wherein the substituent includes a C1-C6 alkoxy group.

Specific examples of the compounds represented by formula [IV] include 2-diphenylethylene, 1,1-diphenylethylene, α-methylstyrene, 4-isopropenyl toluene, β-methylstyrene, β-methoxystyrene, 2,4-diphenyl-4-methyl-1-pentene, 4-methoxypropenylbenzene, 1,2-dimethoxy-4-(1-propenyl)benzene, 1,2-diethoxy-4-(1-propenyl)benzene, isosafrole, 1-benzyloxy-2-methoxy-4-(1-propenyl)benzene, 4-(1-ethoxyethoxy)-3-methoxy-1-propenylbenzene, cinnamyl methyl ether, cinnamyl phenyl ether, and 1-ethoxyethylcinnamyl ether.

The amount of the polymerization initiator represented by formula [II] to be used is generally 0.0001 to 0.2 equivalent, preferably 0.0005 to 0.1 equivalent relative to the styrene monomer to be used. A target polymer can be produced with a high yield by using the polymerization initiator in this range.
Further, in the organometallic compound represented by formula [III],
R⁸ represents an alkyl group or an aryl group, wherein a C1-C20 alkyl group is preferred, and a C1-C8 alkyl group is more preferred; m represents the valence of M, and when m is 2 or more, R⁸ is the same or different from each other; and M represents an atom belonging to Group 2 of the long period type periodic table such as magnesium and calcium; an atom belonging to Group 12 of the same table such as zinc and cadmium; or an atom belonging to Group 13 of the same table such as aluminum.
Specific examples of the organometallic compounds represented by formula [III] include organomagnesium compounds such as di-n-butylmagnesium, di-t-butylmagnesium, di-s-butylmagnesium, n-butyl-s-butylmagnesium, n-butyl-ethylmagnesium, di-n-amylmagnesium, dibenzylmagnesium, and diphenylmagnesium; organozinc compounds such as diethylzinc and dibutylzinc; and organoaluminum compounds such as trimethylaluminum, triethylaluminum, triisobutylaluminum, and tri-n-hexylaluminum, wherein dialkyl zinc, dialkylmagnesium, and trialkylaluminum are preferred. These can be used alone or in combination of two or more.

The amount of the organometallic compound represented by formula [III] of the present invention to be used is not particularly limited, but it is preferably used, for example, in the range of 0.1 to 20 times by mole, more preferably in the range of 1/2 to 5 times by mole relative to the polymerization initiator. Thereby, a polymer in which the molecular weight and molecular weight distribution are controlled can be produced more stably with good reproducibility.

The organic potassium compound used in the present invention is not limited as long as it is soluble in a polymerization solvent and does not have the ability to start the polymerization of monomers. Among those, an organic potassium compound represented by formula [V] is preferred.

In formula [V], R⁹ represents an alkyl group, a cycloalkyl group, an alkylsulfonyl group, an arylsulfonyl group, a heteroarylsulfonyl group, an alkylcarbonyl group, an arylcarbonyl group, a heteroarylcarbonyl group, an aryl group, a heteroaryl group, an aralkyl group, or a heteroaralkyl group, wherein a C1-C6 alkyl group, a C3-C6 cycloalkyl group, a C1-C6 alkylsulfonyl group, an arylsulfonyl group, a heteroarylsulfonyl group, a C1-C6 alkylcarbonyl group, an arylcarbonyl group, a heteroaryl carbonyl group, an aryl group, a heteroaryl group, an aralkyl group, and a heteroaralkyl group are preferred, and a C1-C6 alkyl group, an aryl group, a heteroaryl group, a C1-C6 alkylcarbonyl group are more preferred. These groups optionally have a substituent, wherein the substituent includes a C1-C6 alkyl group and a C1-C6 alkoxy group.

The organic potassium compound includes
potassium alcoholates of linear, branched or cyclic C1-C24 alcohols such as methanol, ethanol, isopropanol, n-butanol, t-butanol, stearyl alcohol, and cyclohexanol;
potassium salts of phenols such as 2-allylphenol, eugenol, isoeugenol, 4-tert-amylphenol, 4-n-amyloxyphenol, 4-(1-adamantyl)phenol, 1-(2-pyridylazo)-2-naphthol, 1-(2-thiazolylazo)-2-naphthol, 2-benzylphenol, 4-tert-butylphenol, 4-n-butylphenol, 3-butoxyphenol, 6-tert-butyl-m-cresol, 4-hydroxy-3-tert-butylanisole, 6-tert-butyl-o-cresol, 3-tert-butylphenol, 2-sec-butylphenol, 6-tert-butyl-2,4-xylenol, 2-tert-butyl-p-cresol, 4-(benzyloxy) phenol, 2-(benzyloxy)phenol, 4-benzylideneaminophenol, 2-tert-butyl-4-ethylphenol, 4-tert-butoxyphenol, 2,4-bis(α,α-dimethylbenzyl)phenol, 4-sec-butyl-2,6-di-tert-butylphenol, carvacrol, 2-(3-sec-butyl-5-tert-butyl-2-hydroxyphenyl)benzotriazole, 4-phenylphenol, 4-α-cumylphenol, 4-cyclohexylphenol, 2-cyclohexyl-5-methylphenol, 2,6-di-tert-butyl-p-cresol, 2,4-di-tert-butylphenol, N,N-diethyl-3-aminophenol, 2,6-diisopropylphenol, 2,6-dimethoxyphenol, 2-dimethylaminomethylphenol, 2,6-dimethylphenol, 4-tert-butyl-2,6-diisopropylphenol, 4,6-di-tert-butyl-m-cresol, 2-(3,5-di-tert-butyl-2-hydroxyphenyl)-5-chlorobenzotriazole, 2,6-di-tert-butyl-4-ethylphenol, 2,6-di-tert-butyl-4-methoxyphenol, N,N-dibutyl-3-aminophenol, 2,3-dihydro-2,2-dimethyl-7-hydroxybenzofuran, 2,6-di-tert-butyl-4-dimethylaminomethylphenol, 2,6-diphenylphenol, diethyl 3,5-di-tert-butyl-4-hydroxybenzylphosphonate, 2,4-di-tert-amylphenol, 2,6-dibromo-p-cresol, 2-ethoxy-5-(1-propenyl)phenol, 4-hydroxybenzophenone, umbelliferone, 5-hydroxyindan, 2-hydroxy-4-methoxybenzophenone, 2-hydroxy-4-n-octyloxybenzophenone, 8-quinolinol, 4-hexyloxyphenol, 4-heptyloxyphenol, 2-(2-hydroxy-5-methylphenyl)benzotriazole, 2-(5-chloro-2-benzotriazolyl)-6-tert-butyl-p-cresol, 2-(3,5-di-tert-amyl-2-hydroxyphenyl)benzotriazole, 2-(5-tert-butyl-2-hydroxyphenyl)benzotriazole, 10-hydroxybenzo[h]quinoline, 8-hydroxyjulolidine, 2-(2-hydroxyphenyl)benzothiazole, 1-(3-hydroxybenzyl)piperidine, 4-methoxy-1-naphthol, p-naphtholbenzein, 4-n-octyloxyphenol, 8-hydroxy-7-propylquinoline, 2-propyl-4-(4-pyridylazo)phenol, 2,4,6-tri-tert-butylphenol, 2,4,6-tris(dimethylaminomethyl)phenol, 4-triphenylmethylphenol, m-cresolindophenol, thymolindophenol, 2-phenylphenol, and naphthol;
potassium salts of carboxylic acids such as pivalic acid, isobutyric acid, hexanoic acid, 2-ethylhexanoic acid, decanoic acid, lauric acid, myristic acid, stearic acid, N-lauroyl sarcosine, 1-naphthaleneacetic acid, oleic acid, linoleic acid, sorbic acid, phenoxyacetic acid, α-methoxyphenylacetic acid, 3-phenoxypropionic acid, 4-phenoxybutyric acid, N,N-diethylglycine, 2-naphthoic acid, picolinic acid, 5-phenoxy-n-valeric acid, 3-(4-methoxyphenyl)propionic acid, 3,4-methylenedioxyphenylacetic acid, (±)-2-(6-methoxy-2-naphthyl)propionic acid, 2-naphthyloxyacetic acid, 2-phenoxypropionic acid, anthraquinone-2-carboxylic acid, 4-amyloxybenzoic acid, 2-anthracenecarboxylic acid, 4-butylbenzoic acid, 4-tert-butylbenzoic acid, 4-benzoylbenzoic acid, 4-benzyloxybenzoic acid, 4-(4-tert-buthylphenyl)benzoic acid, 3,5-dibenzyloxybenzoic acid, 4-cyclohexylbenzoic acid, 4'-decyloxybiphenyl-4-carboxylic acid, 2,3-dihydrobenzofuran-7-carboxylic acid, 4-diethylaminobenzoic acid, 3,5-di-tert-butylbenzoic acid, 4-(dodecyloxy)benzoic acid, 3',4'-dimethylbenzophenone-2-carboxylic acid, 4-(diphenylphosphino)benzoic acid, 9,9-dimethylfluorene-2-carboxylic acid, 4-ethoxybenzoic acid, 2-ethoxy-l-naphthoic acid, fluoresceine, 9-fluorenone-2-carboxylic acid, 3-fluoro-4-n-octyloxybenzoic acid, 1-fluorenecarboxylic acid, 4-(4-heptylphenyl)benzoic acid, 4-(4-hexylphenyl)benzoic acid, 4-hexylbenzoic acid, 4-isobutylbenzoic acid, 6-methoxy-2-naphthoic acid, 4-(methylthio)benzoic acid, 4-n-octyloxybenzoic acid, 4-n-octylbenzoic acid, piperonyl acid, 2-phenoxybenzoic acid, 2-phenylthiomethylbenzoic acid, 1-pyrenecarboxylic acid, 2-propoxybenzoic acid, 6-quinolinecarboxylic acid, 3,4,5-trimethoxybenzoic acid, 2,4,6-trimethylbenzoic acid, 2-(p-tolyl)benzoic acid, 3,4,5-tris(benzyloxy)benzoic acid, 4-undecyloxybenzoic acid, and 4-methoxycinnamic acid;
potassium thiolates such as 2-mercaptobenzothiazole, 5-mercapto-3-phenyl-1,3,4-thiadiazole-2-thione, s-butyl mercaptan, t-butyl mercaptan, 2-methyl-2-butanethiol, isoamyl mercaptan, 2-methyl-1-butanethiol, 3-methyl-2-butene-1-thiol, cyclohexanethiol, cyclopentanethiol, 1-heptanethiol, tert-octanethiol, 1-decanethiol, 1-undecanethiol, 1-dodecanethiol, 1-tetradecanethiol, 1-hexadecanethiol, n-pentadecyl mercaptan, 1-octadecanethiol, tert-tetradecanethiol, 2-dimethylaminoethanethiol, 2-diethylaminoethanethiol, 2-diisopropylaminoethanethiol, benzyl mercaptan, 4-methoxybenzyl mercaptan, 2-phenylethyl mercaptan, 2-mercapto thiazoline, 2-mercapto-5-thiazolidone, 2-mercapto-5-methylthio-1,3,4-thiadiazole, 2-methyltetrahydrofuran-3-thiol, (2-mercaptoethyl)pyrazine, 4-pyridineethanethiol, trimethylsilylmethanethiol, 2-thiophenemethanethiol, 1-(4-ethoxyphenyl)-5-mercapto-1H-tetrazole;
potassium salts of thiophenols such as thiophenol, 4-methylthiophenol, 4-(methylthio)benzenethiol, 4-t-butylthiophenol, 4-isopropylbenzenethiol, 5-tert-butyl-2-methylbenzenethiol, 4-methoxybenzenethiol, 4-chlorobenzenethiol, 2,5-dimethylbenzenethiol, 2,4-dimethylbenzenethiol, 3,4-dimethylbenzenethiol, 3,4-dimethoxybenzenethiol, 3-ethoxybenzenethiol, 2-ethylbenzenethiol, 4-ethylbenzenethiol, and 2-naphthalenethiol;
potassium salts of sulfur compounds such as potassium isopropyl xanthate, potassium ethyl xanthate, potassium butyl xanthate, potassium amyl xanthate, and potassium dibenzyldithiocarbamate, and thiobenzoic acid;
potassium salts of sulfonic acids such as 1-butanesulfonic acid, 1-hexanesulfonic acid, 1-heptanesulfonic acid, 1-octanesulfonic acid, 1-nonanesulfonic acid, 1-decanesulfonic acid, 1-undecanesulfonic acid, 1-pentadecanesulfonic acid, 1-dodecanesulfonic acid, 1-tridecanesulfonic acid, 1-octadecanesulfonic acid, dodecylsulfuric acid, 1-hexadecanesulfonic acid, heptadecafluoro-1-octanesulfonic acid, anthraquinone-2-sulfonic acid, 9,10-dimethoxyanthracene-2-sulfonic acid, 2,4-dimethylbenzenesulfonic acid, mesitylenesulfonic acid, 4-n-octylbenzenesulfonic acid, 2-morpholinoethanesulfonic acid, 2-morpholinopropanesulfonic acid, 3-(trimethylsilyl)-1-propanesulfonic acid, dansyl acid, and dodecylbenzenesulfonic acid;
potassium salts of thiosulfonic acids such as p-toluenethiosulfonic acid;
potassium salts of phosphoric acids such as monododecyl phosphate, diphenyl phosphate, diisopropyl phosphate, dibutyl phosphate, dioleyl phosphate, di-2-ethylhexyl phosphate, didecyl phosphate, and dibenzyl phosphate;
potassium salts of nitrogen compounds such as carbazole, indole, phenothiazine, phenoxazine, hexamethyldisilazane, phthalimide, 1,2,4-triazole, 6-methyl-1,2,3-oxathiazin-4(3H)-one, 2,2-dioxide, thiomorpholine, and morpholine; and
potassium salts of others such as tetrakis(4-chlorophenyl)borate and tris(3,5-dimethylpyrazol-1-yl)borohydride.

The amount of the potassium compound used in the present invention can be arbitrary in the range which does not influence the polymerization, but specifically, it is preferably 10% by mole or more and 20 times by mole or less, more preferably 50% by mole or more and 5 times by mole or less relative to the initiator in the molar ratio. When it is smaller than 10% by mole relative to the initiator, the rate of polymerization may be slow, and it may not be able to stably produce a polymer in which the number average molecular weight and polydispersity index are controlled with good reproducibility, when the polymer is produced. When the potassium compound is used in an amount of 20 times by mole or more relative to the initiator, the compound may not dissolve in a polymerization liquid, or the growth rate during the polymerization reaction may be significantly reduced.

Examples of the ether group-containing solvent in the solvent comprising the ether group-containing solvent of the present invention include ether compounds such as diethyl ether, tetrahydrofuran (THF), dioxane, and trioxane. Further, these solvents can be used alone or in combination of two or more. A solvent which can be used in combination with the ether group-containing solvent are not particularly limited as long as it is a polar solvent which does not participate in the polymerization reaction and is compatible with a polymer, and examples thereof include tertiary amines such as tetramethylethylenediamine and hexamethylphosphoric triamide. Further, even an aliphatic, aromatic, or an alicyclic hydrocarbon compound having a low polarity can be used in combination with the ether group-containing solvent if the compound is relatively compatible with a polymer, and specific examples thereof include a combination of hexane and THF.

The concentration of monomers in the polymerization solvent is not particularly limited, but it is generally in the range of 1 to 40% by weight, preferably in the range of 2 to 15% by weight.

The polymerization temperature in the present invention is not particularly limited as long as it is in a temperature range in which side reactions such as transfer reaction and termination reaction do not occur and monomers are consumed to complete the polymerization, but the polymerization is preferably performed at a temperature of -10°C or higher, more preferably 0°C or higher, and a boiling point of the polymerization solvent or lower. Further, the concentration of monomers in the polymerization solvent is not particularly limited, but it is generally in the range of 1 to 40% by weight, preferably in the range of 5 to 25% by weight.
The molecular weight of the polymer to be polymerized in the present invention is not particularly limited, but a polymer having a number average molecular weight by GPC measurement of 500 to 2000, preferably 1000 to 2000, is also included.

The polydispersity index (the degree of molecular weight dispersion) of a polymer in the present specification can be computed from the weight average molecular weight (Mw)/the number average molecular weight (Mn). The weight average molecular weight (Mw) and the number average molecular weight (Mn) can be measured, for example, with gel permeation chromatography (GPC). More specifically, it is possible to use, for example, Waters 2695 Alliance, 2695 photodiode array detector, 2414 differential refractometer, and the like manufactured by Nihon Waters K.K., as a GPC apparatus; a column obtained by connecting KF-801, KF-802, and KF-803 manufactured by Showa Denko K.K., as a column; and Empower 2 (registered trademark) manufactured by Nihon Waters K.K., as the software with respect to the control of the GPC apparatus and the analysis of GPC. Further, the values measured using tetrahydrofuran as a solvent for measurement and at a column temperature of 40°C are used in the present specification. The polydispersity index of a polymer in the present specification refers to a polydispersity index measured with any one of conventional GPC apparatuses, but more preferably, it refers to a polydispersity index measured using the above-described specific apparatuses, column, and software.

In the present invention, a styrene polymer having a low polydispersity index can be produced even if it has a low number average molecular weight, by controlling polymerization while suppressing side reactions at a high temperature in the vicinity of room temperature even in the case where an ether group-containing solvent is used.
The polymer obtained by the manufacturing method of the present invention is a polymer which is essentially monodisperse and has a low polydispersity index. For example, even if the polymer is a low molecular weight polymer having a number average molecular weight of 2000 or less, a polymer having a polydispersity index of 1.01 to 1.10 can be produced.

### Examples

Hereinafter, the present invention will be described in detail with reference to Examples, but the technical scope of the present invention is not limited to these illustrations.

### Example 1

In a nitrogen atmosphere, a n-butyllithium solution (1.18 g, 3 mmol) was added to tetrahydrofuran (THF) (200 g) at room temperature, followed by stirring for 60 minutes. Subsequently, thereto were successively added diphenylethylene (3.78 g, 21 mmol), a n-butyllithium solution (8.30 g, 20 mmol), and a solution of diethylzinc in hexane (15.53 g, 21 mmol) at 0°C. Then, thereto was dropwise added a solution of p-t-butoxystyrene (22.68 g, 129 mmol) in THF (20 g) over 3 minutes, and after completion of the dropwise addition, the mixture was stirred for 30 minutes at 2 to 3°C. Subsequently, thereto was added a 12% solution of t-butoxy potassium in THF (18.70 g, 20 mmol), and the mixture was stirred for 30 minutes and then stirred for 1 hour at 25 to 29°C. Then, the mixture was killed by the addition of methanol (3.36 g). The color of anions in the early stage of polymerization was red to reddish brown, which hardly changed immediately before killing. The solution after killing was measured with gas chromatography, and it was found that the monomer did not remain. Further, the solution was subjected to GPC measurement, and it was found that a polymer having a number average molecular weight (Mn) of 1500 and a polydispersity index (Mw/Mn) of 1.06 was produced.
The solution after killing was concentrated, dissolved in ethyl acetate (300 g), and washed with pure water (200 g). The organic phase was concentrated and then dissolved in a mixed solvent of toluene (50 g)/ethanol (30 g), and thereto was added concentrated hydrochloric acid (6.88 g, 68 mmol) and pure water (3.05 g), followed by stirring at 90°C for 3 hours. The resulting mixture was cooled to room temperature, and thereto was added triethylamine (6.94 g, 69 mmol). The resulting mixture was stirred, followed by addition of acetic acid (4.08 g, 68 mmol) and concentration. The concentrated mixture was subjected to separation operation with ethyl acetate (200 g) and pure water (200 g), and then the organic phase was concentrated and dried under reduced pressure.

The resulting p-hydroxystyrene polymer was subjected to GPC measurement, and it was found that a polymer having a number average molecular weight (Mn) of 1300 and a polydispersity index (Mw/Mn) of 1.06 was obtained. The number of p-hydroxystyrene units calculated from NMR measurement was 6.6.

### Example 2

In a nitrogen atmosphere, a n-butyllithium solution (1.41 g, 3 mmol) was added to THF (200 g) at room temperature, followed by stirring for 60 minutes. Subsequently, thereto were successively added diphenylethylene (4.01 g, 22 mmol), a n-butyllithium solution (8.45 g, 20 mmol), and a solution of diethylzinc in hexane (14.62 g, 20 mmol) at 0°C, followed by stirring for 5 minutes. Then, thereto was dropwise added a solution of p-t-butoxystyrene (24.74 g, 140 mmol) in THF (20 g) over 5 minutes, and after completion of the dropwise addition, the mixture was stirred for 30 minutes at 2 to 3°C. Subsequently, thereto was added a solution of t-butoxy potassium in THF (12%, 19.30 g, 21 mmol), and the mixture was stirred for 30 minutes, then stirred for 1 hour at 25 to 29°C, and killed by the addition of methanol (3.22 g). The color of anions in the early stage of polymerization was red to reddish brown, which hardly changed immediately before killing. The solution after killing was measured with gas chromatography, and it was found that the monomer did not remain. Further, the solution was subjected to GPC measurement, and it was found that a polymer having a number average molecular weight (Mn) of 2000 and a polydispersity index of 1.08 was produced.
The solution after killing was concentrated, dissolved in ethyl acetate (300 g), and washed with pure water (200 g). The organic phase was concentrated and then dissolved in a mixed solvent of toluene (50 g)/ethanol (30 g), and thereto was added concentrated hydrochloric acid (7.55 g, 75 mmol) and pure water (3.32 g), followed by stirring at 90°C for 3 hours. The resulting mixture was cooled to room temperature, and thereto was added triethylamine (7.74 g, 74 mmol). The resulting mixture was stirred, followed by addition of acetic acid (4.63 g, 77 mmol) and concentration. The concentrated mixture was subjected to separation operation with ethyl acetate (200 g) and pure water (200 g), and then the organic phase was concentrated and dried under reduced pressure.

The resulting p-hydroxystyrene polymer was subjected to GPC measurement, and it was found that a polymer having a number average molecular weight (Mn) of 1800 and a polydispersity index (Mw/Mn) of 1.09 was obtained. The number of p-hydroxystyrene units calculated from NMR measurement was 8.7.

### Example 3

In a nitrogen atmosphere, a n-butyllithium solution (1.37 g, 3 mmol) was added to THF (200 g) at room temperature, followed by stirring for 60 minutes. Subsequently, thereto were successively added diphenylethylene (0.93 g, 5 mmol), a n-butyllithium solution (2.15 g, 5 mmol), and a solution of diethylzinc in hexane (3.63 g, 5 mmol) at 0°C, followed by stirring for 5 minutes. Then, thereto was added a solution of t-butoxy potassium in THF (12%, 5.00 g, 5 mmol), and the mixture was stirred for 5 minutes. Subsequently, thereto was dropwise added a solution of p-t-butoxystyrene (5.62 g, 259 mmol) in THF (30 g) over 13 minutes at 20°C, and the mixture was stirred for 2 hours at 23 to 29°C and killed by the addition of methanol (1.64 g). The color of anions in the early stage of polymerization was red, which hardly changed immediately before killing. The solution after killing was measured with gas chromatography, and it was found that the monomer did not remain. Further, the solution was subjected to GPC measurement, and it was found that a polymer having a number average molecular weight (Mn) of 14200 and a polydispersity index of 1.09 was produced.

### (Comparative Example 1)

In a nitrogen atmosphere, a n-butyllithium solution (1.22 g, 3 mmol) was added to THF (200 g) at room temperature, followed by stirring for 60 minutes. Subsequently, thereto were successively added diphenylethylene (3.76 g, 21 mmol), a n-butyllithium solution (8.84 g, 21 mmol), and a solution of diethylzinc in hexane (16.10 g, 22 mmol) at 0°C, followed by stirring for 5 minutes. Then, thereto was dropwise added a solution of p-t-butoxystyrene (17.99 g, 102 mmol) in THF (20 g) over 3 minutes, and after completion of the dropwise addition, the mixture was stirred for 30 minutes at 2 to 3°C and then stirred for 3 hours at 25 to 29°C. Then, the mixture was killed by the addition of methanol (2.97 g). The color of anions in the early stage of polymerization was red to reddish brown, but it was yellow immediately before killing, showing that the anions were deactivated. The solution after killing was measured with gas chromatography, and it was found that the monomer remained. Further, the solution was subjected to GPC measurement, and it was found that a three-peak polymer having a molecular weight of 1300, 870, and 660 at each peak top was produced.

### (Comparative Example 2)

In a nitrogen atmosphere, a n-butyllithium solution (1.10 g, 3 mmol) was added to THF (200 g) at room temperature, followed by stirring for 60 minutes. Subsequently, thereto were successively added a solution of diethylzinc in hexane (15.75 g, 22 mmol) and a n-butyllithium solution (8.96 g, 22 mmol) at 0°C, followed by stirring for 5 minutes. Then, thereto was dropwise added a solution of p-t-butoxystyrene (21.48 g, 122 mmol) in THF (20 g) over 4 minutes, and after completion of the dropwise addition, the mixture was stirred for 30 minutes at 2 to 3°C. Subsequently, thereto was added a solution of t-butoxy potassium in THF (12%, 19.78 g, 22 mmol), and the mixture was stirred for 30 minutes and then stirred for 1 hour at 25 to 29°C. Then, the mixture was killed by the addition of methanol (2.34 g). The color of the polymerization liquid was pale lemon from the beginning, and the color of anions was not observed. The solution after killing was measured with gas chromatography, and it was found that the monomer remained in large quantities. Further, the solution was subjected to GPC measurement, and it was found that a polymer having a number average molecular weight (Mn) of 177000 and a polydispersity index of 1.08 was produced in a trace amount.

### Example 4

In a nitrogen atmosphere, potassium pivalate (2.94 g, 21 mmol) was added to THF (202 g), and then thereto was added a n-butyllithium solution (1.25 g, 3 mmol) at room temperature, followed by stirring for 30 minutes. Subsequently, the mixture was cooled with ice water, and thereto were added diphenylethylene (3.66 g, 20 mmol) and a n-butyllithium solution (8.35 g, 20 mmol), followed by stirring for 10 minutes. To the resulting mixture was added a solution of diethylzinc in hexane (17.11 g, 24 mmol), followed by stirring for 5 minutes. Then, the cooling was stopped, and a solution prepared by adding styrene (13.77 g, 132 mmol) to THF (20 g), which was dehydrated with a solution of dibutylmagnesium in hexane (0.48 g, 0.7 mmol), was dropwise added over 21 minutes, and after completion of the dropwise addition, the mixture was stirred at 27°C for 1 hour and killed by the addition of methanol (1.32 g).
The killed solution was measured with gas chromatography, and it was found that the monomer did not remain. Further, the solution was subjected to GPC measurement, and it was found that a polymer having a number average molecular weight (Mn) of 1100 and a polydispersity index of 1.07 was produced.

### Example 5

In a nitrogen atmosphere, the potassium salt of p-t-amylphenol (4.04 g, 20 mmol) was added to THF (200 g), and then thereto was added a n-butyllithium solution (1.20 g, 3 mmol) at room temperature, followed by stirring for 30 minutes. Subsequently, the mixture was cooled with ice water, and thereto were added diphenylethylene (3.88 g, 22 mmol) and a n-butyllithium solution (8.57 g, 21 mmol), followed by stirring for 10 minutes. To the resulting mixture was added a solution of diethylzinc in hexane (15.59 g, 21 mmol), followed by stirring for 5 minutes. Then, the cooling was stopped, and a solution prepared by adding p-t-butylstyrene (19.36 g, 121 mmol) to THF (21 g), which was dehydrated with a solution of dibutylmagnesium in hexane (0.62 g, 0.9 mmol), was dropwise added over 23 minutes, and after completion of the dropwise addition, the mixture was stirred at 31°C for 1 hour and killed by the addition of methanol (5.22 g).
The killed solution was measured with gas chromatography, and it was found that the monomer did not remain. Further, the solution was subjected to GPC measurement, and it was found that a polymer having a number average molecular weight (Mn) of 1600 and a polydispersity index of 1.06 was produced.

### Example 6

In a nitrogen atmosphere, the potassium salt of 2-mercaptothiazoline (3.14 g, 20 mmol) was added to THF (202 g), and then thereto was added a n-butyllithium solution (1.21 g, 3 mmol) at room temperature, followed by stirring for 30 minutes. Subsequently, the mixture was cooled with ice water, and thereto were added diphenylethylene (4.10 g, 23 mmol) and a n-butyllithium solution (9.31 g, 22 mmol), followed by stirring for 10 minutes. To the resulting mixture was added a solution of diethylzinc in hexane (15.61 g, 21 mmol), followed by stirring for 5 minutes. Then, the cooling was stopped, and a solution prepared by adding styrene (12.70 g, 122 mmol) to THF (14 g), which was dehydrated with a solution of dibutylmagnesium in hexane (0.50 g, 0.7 mmol), was dropwise added over 11 minutes, and after completion of the dropwise addition, the mixture was stirred at 31°C for 1 hour and killed by the addition of methanol (3.16 g).
The killed solution was measured with gas chromatography, and it was found that the monomer did not remain. Further, the solution was subjected to GPC measurement, and it was found that a polymer having a number average molecular weight (Mn) of 1900 and a polydispersity index of 1.10 was produced.

### Example 7

In a nitrogen atmosphere, the potassium salt of benzotriazole (3.14 g, 20 mmol) was added to THF (202 g), and then thereto was added a n-butyllithium solution (1.23 g, 3 mmol) at room temperature, followed by stirring for 30 minutes. Subsequently, the mixture was cooled with ice water, and thereto were added diphenylethylene (3.67 g, 20 mmol) and a n-butyllithium solution (8.55 g, 21 mmol), followed by stirring for 10 minutes. To the resulting mixture was added a solution of diethylzinc in hexane (14.53 g, 20 mmol), followed by stirring for 5 minutes. Then, the cooling was stopped, and a solution prepared by adding styrene (19.17 g, 184 mmol) to THF (17 g), which was dehydrated with a solution of dibutylmagnesium in hexane (0.51 g, 0.7 mmol), was dropwise added over 22 minutes, and after completion of the dropwise addition, the mixture was stirred at 28°C for 1 hour and killed by the addition of methanol (3.26 g).
The killed solution was measured with gas chromatography, and it was found that the monomer did not remain. Further, the solution was subjected to GPC measurement, and it was found that a polymer having a number average molecular weight (Mn) of 1300 and a polydispersity index of 1.10 was produced.

### Industrial Applicability

According to the method for manufacturing a styrene polymer of the present invention, it has become possible to control polymerization while suppressing side reactions in the polymerization initiation step using a polymerization initiator excellent in handleablity at a high temperature in the vicinity of room temperature even if a polymerization solvent comprising an ether group-containing solvent is used. As a result, a styrene polymer having a low polydispersity index can be produced, the polymer including not only a polymer having a number average molecular weight of 2000 or more but also a polymer having a number average molecular weight of 2000 or less.
The polymer obtained by the manufacturing method of the present invention is useful as a material such as a resist material and an additive to various polymers because the number average molecular weight and the polydispersity index are well controlled.

## Claims

1. A styrene polymer having a number average molecular weight of 2000 or less and a polydispersity index (Mw/Mn) of 1.01 to 1.10.

2. The styrene polymer according to claim 1, wherein the polymer has a repeating unit represented by formula [I]: 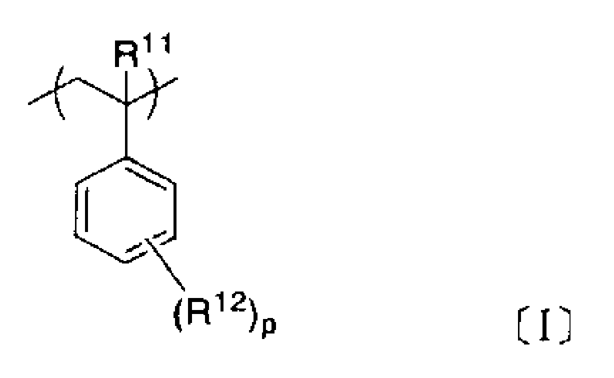 (wherein R¹¹ represents a hydrogen atom or an alkyl group; R¹² represents a hydroxy group, an alkyl group, an alkoxy group, a t-butoxycarbonyl group, a t-butoxycarbonylmethyl group, or a tetrahydropyranyl group, wherein when p is 2 or more, R¹² is the same or different from each other; and p represents an integer of 0 to 5).

3. A method for manufacturing a styrene polymer according to claim 1 or 2, comprising polymerizing a styrene monomer in a solvent comprising an ether group-containing solvent in the presence of
a polymerization initiator represented by formula [II]: 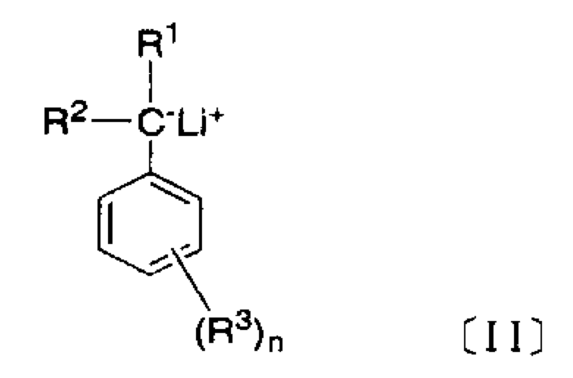 (wherein R¹ represents a hydrogen atom, an alkyl group, or a phenyl group; R² represents an alkyl group; R³ represents an alkyl group or an alkoxy group, wherein when n is 2 or more, R³ is the same or different from each other; and n represents an integer of 0 to 5),
an organometallic compound represented by formula [III]:
(R⁸)ₘM [III]
(wherein R⁸ represents an alkyl group or an aryl group, wherein when m is 2 or more, R⁸ is the same or different from each other; M represents an atom belonging to Group 2, 12 or 13 of the long period type periodic table; and m represents the valence of M), and
an organic potassium compound, at a temperature between - 10°C or higher and a boiling point of the solvent or lower.

4. The method for manufacturing a styrene polymer according to claim 3, comprising allowing an alkyllithium compound and a compound represented by formula [IV]: 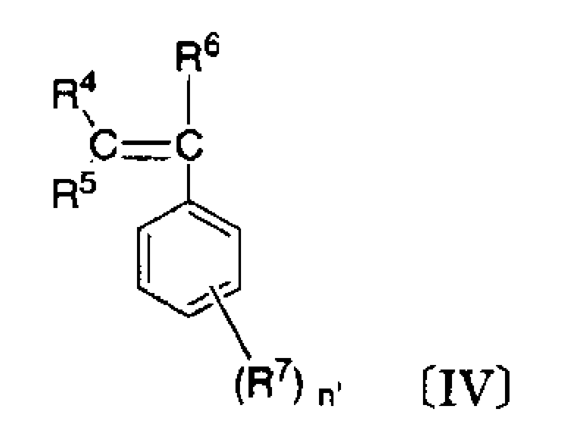 (wherein R⁴ represents a hydrogen atom, an alkyl group, or a phenyl group; R⁵ represents a hydrogen atom or an alkyl group; R⁶ represents a hydrogen atom, an alkyl group, or a phenyl group; R⁷ represents an alkyl group or an alkoxy group; and n' represents an integer of 0 to 5) to react with each other in a solvent comprising an ether group-containing solvent to form a polymerization initiator represented by formula [II], and then adding an organometallic compound represented by formula [III], a styrene monomer, and an organic potassium compound.

5. The method for manufacturing a styrene polymer according to claim 3 or 4, wherein the compound represented by formula [III] is dialkyl zinc, dialkyl magnesium, or trialkyl aluminum.

6. A method for manufacturing a styrene polymer, comprising polymerizing a styrene monomer in a solvent comprising an ether group-containing solvent in the presence of
a polymerization initiator represented by formula [II]: 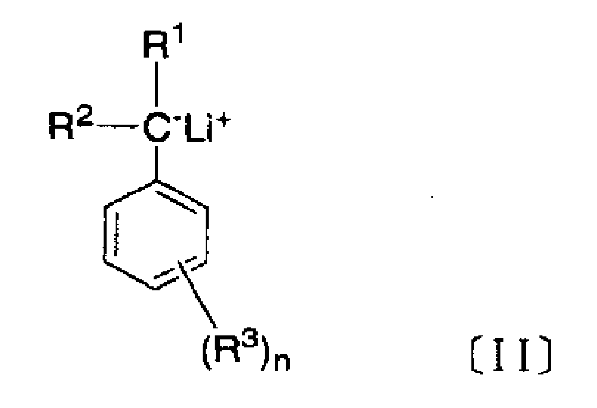 (wherein R¹ represents a hydrogen atom, an alkyl group, or a phenyl group; R² represents an alkyl group; R³ represents an alkyl group or an alkoxy group, wherein when n is 2 or more, R³ is the same or different from each other; and n represents an integer of 0 to 5),
an organometallic compound represented by formula [III]:
(R⁸)ₘM [III]
(wherein R⁸ represents an alkyl group or an aryl group, wherein when m is 2 or more, R⁸ is the same or different from each other; M represents an atom belonging to Group 2, 12 or 13 of the long period type periodic table; and m represents a valence of M), and
an organic potassium compound represented by formula [V]:
R⁹-O⁻K⁺ [V]
(wherein R⁹ represents an alkyl group, a cycloalkyl group, an alkylsulfonyl group, an arylsulfonyl group, a heteroarylsulfonyl group, an alkylcarbonyl group, an arylcarbonyl group, a heteroarylcarbonyl group, an aryl group, a heteroaryl group, an aralkyl group, or a heteroaralkyl group), at a temperature between -10°C or higher and a boiling point of the solvent or lower.

7. The method for manufacturing a styrene polymer according to claim 6, comprising allowing an alkyllithium compound and a compound represented by formula [IV]: 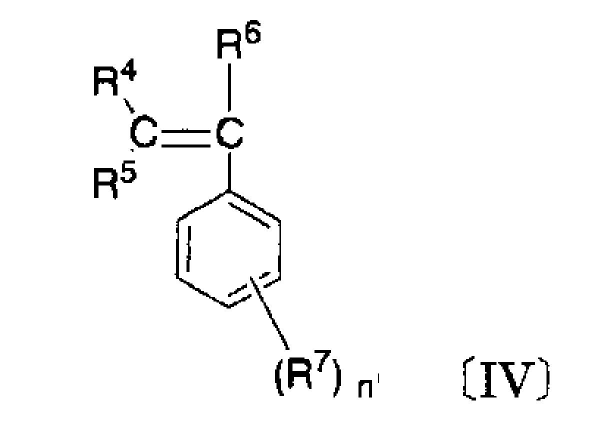 (wherein R⁴ represents a hydrogen atom, an alkyl group, or a phenyl group; R⁵ represents a hydrogen atom or an alkyl group; R⁶ represents a hydrogen atom, an alkyl group, or a phenyl group; R⁷ represents an alkyl group or an alkoxy group; and n' represents an integer of 0 to 5) to react with each other in a solvent comprising an ether group-containing solvent to form a polymerization initiator represented by formula [II], and then adding an organometallic compound represented by formula [III], a styrene monomer, and an organic potassium compound represented by formula (V).

8. The method for manufacturing a styrene polymer according to any one of claims 3 to 7, wherein the ether group-containing solvent is tetrahydrofuran.
